# EUROPÄISCHE PATENTANMELDUNG

(11) **EP 2 568 082 A1**
(43) Veröffentlichungstag der Anmeldung: **13.03.2013**
(21) Anmeldenummer: 12006219.5
(22) Anmeldetag: 03.09.2012
(51) Int. Cl.: E02B 17/02

(54) **Verfahren zur Installation einer Offshorestruktur**

(30) Priorität: 09.09.2011 DE 102011112786; 15.10.2011 DE 102011116203
(71) Anmelder: WeserWind GmbH Offshore Construction Georgsmarienhütte, 27572 Bremerhaven (DE)
(72) Erfinder: Hummel, Markus, 27568 Bremerhaven (DE)
(74) Vertreter: Möller, Friedrich

(57) **Zusammenfassung**

Der Transport von Gründungsstrukturen (10) für Windenergieanlagen erfolgt üblicherweise mit Hilfe von Pontons, auf welchen die Gründungsstrukturen (10) in tragender Weise befördert werden. Am Installationsort werden die Gründungsstrukturen (10) mit Hilfe geeigneter Hubvorrichtung, insbesondere Kranen (23), vom Schiff (26) oder Ponton heruntergehoben und im Wasser (25) abgesetzt. Für diesen Vorgang sind Schwerlastkrane (23) erforderlich. Der Transport und das Absetzen der Gründungsstruktur (10) werden dadurch erschwert und sind kostspielig.

Die Erfindung sieht ein Verfahren zur Installation einer Gründungsstruktur (10) vor, wobei die Gründungsstruktur (10) mit Auftriebselementen (17, 21, 22) versehen wird, womit die Gründungsstruktur (10) im liegenden Zustand schwimmend zum Installationsort transportiert wird und am Installationsort durch Verlagerung des Auftriebs selbsttätig aufgerichtet wird.

## Beschreibung

Die Erfindung betrifft ein Verfahren zur Installation einer Offshorestruktur gemäß dem Oberbegriff des Anspruchs 1.

Der Transport von Offshorestrukturen, insbesondere Gründungsstrukturen für Windenergieanlagen, erfolgt üblicherweise mit Hilfe von Schiffen oder Pontons, auf welchen die Offshorestrukturen in tragender Weise befördert werden. Am Installationsort werden die Offshorestrukturen mit Hilfe geeigneter Hubvorrichtungen, insbesondere Kranen, vom Schiff oder Ponton heruntergehoben und im Wasser abgesetzt. Für diesen Vorgang sind Schwerlastkrane erforderlich. Der Transport und das Absetzen der Offshorestruktur werden dadurch erschwert und sind kostspielig.

Es ist auch schon bekannt, die Offshorestrukturen mit Auftriebselementen im aufrechten Zustand schwimmend zum Installationsort zu überführen. Bedingt durch die große Dimensionierung und das hohe Gewicht werden die Offshorestrukturen in liegendem Zustand, das heißt in horizontaler Lage, an Land hergestellt. Für den aufrechten Transport der Offshorestrukturen auf dem Wasser muss die Offshorestruktur dann an Land aus ihrer horizontalen Lage in eine vertikale Lage aufgerichtet werden. Für dieses Aufrichten sind ebenfalls Schwerlastkrane erforderlich. Das Aufrichten der Offshorestruktur an Land ist daher auch kostspielig und aufwendig. Desweiteren setzt der vertikale schwimmende Transport von Offshorestrukturen voraus, dass die Wassertiefe ausreicht, um dem nicht unerheblichen Tiefgang der Offshorestruktur gerecht zu werden.

Aufgabe der vorliegenden Erfindung ist es nun, ein Verfahren zur Installation einer Offshorestruktur zu schaffen, womit die Installation der Offshorestruktur einfach, kostengünstig und sicher erfolgen kann.

Die Aufgabe wird erfindungsgemäß durch ein Verfahren mit den Maßnahmen des Anspruchs 1 gelöst. Das erfindungsgemäße Verfahren zur Installation einer Offshorestruktur, insbesondere einer Gründungsstruktur für eine Windenergieanlage, zeichnet sich dadurch aus, dass die Offshorestruktur im liegenden Zustand schwimmend zum Installationsort transportiert wird und vor dem Absenken durch Verlagerung des Auftriebs aufgerichtet wird. Die Offshorestruktur wird demnach in der liegenden Herstellungslage ins Wasser gesetzt. In diesem liegenden Zustand wird die Offshorestruktur im Wasser schwimmend ohne die Offshorestruktur tragende Schiffe oder Pontons zum Installationsort transportiert. Der Tiefgang der Offshorestruktur ist in der liegenden Position gering. Am Installationsort richtet sich dann die Offshorestruktur durch Verlagerung des Auftriebs der selbigen selbstständig auf, indem keine weiteren mechanischen Hubmittel wie zum Beispiel Krane erforderlich werden.

Bevorzugt wird von mindestens einem Auftriebselement, vorzugsweise einer Längsachse derselben, eine schwimmende Drehachse der Offshorestruktur gebildet, wobei sich die Offshorestruktur beim vorzugsweise selbsttätigen Aufrichten um die schwimmende Drehachse dreht. Das selbsttätige Aufrichten wird durch eine Verlagerung bzw. eine Veränderung des Auftriebs der Offshorestruktur erreicht. Durch diese Verlagerung bzw. Veränderung des Auftriebs der Offshorestruktur entsteht bezogen auf die schwimmende Drehachse ein Massenungleichgewicht. Dieses Massenungleichgewicht führt zu einem selbstständigen Drehen und Aufrichten der Offshorestruktur um die schwimmende Drehachse, wobei ein Unterwasserteil der Offshorestruktur ins Wasser abgesenkt und ein Überwasserteil der Offshorestruktur aus dem Wasser herausgehoben wird.

In einer vorteilhaften Ausführung der Erfindung ist es vorgesehen, dass das mindestens eine, die schwimmende Drehachse bildende Auftriebselement aus starren, vorzugsweise zylindrischen, Hohlkörpern gebildet wird. Die Verwendung von Hohlkörpern für das mindestens eine Auftriebselement, dass die schwimmende Drehachse bildet, ist besonders vorteilhaft, da die Geometrie des Hohlkörpers sich beim Drehen des Hohlkörpers um die schwimmende Drehachse beim Aufrichten der Offshorestruktur nicht verändert. Weiterhin ist es vorgesehen, dass das mindestens eine, die schwimmende Drehachse bildende Auftriebselement, vorzugsweise der zylindrische Hohlkörper, derart der Offshorestruktur zugeordnet wird, dass die Längsachse oberhalb des Massenschwerpunktes der Offshorestruktur und senkrecht zu der Längsachse der Offshorestruktur ausgerichtet ist. Für den Fall, dass es sich um einen einzigen zylindrischen Hohlkörper handelt, erstreckt sich dieser durch die Offshorestruktur, derart, dass die Längsachse des einen zylindrischen Hohlkörpers in Bezug zur Längsachse der Offshorestruktur oberhalb des Massenschwerpunktes der Offshorestruktur positioniert ist. Für den Fall, dass es sich bei den die schwimmende Drehachse bildenden Auftriebselementen um zwei zylindrische Hohlkörper handelt, sind diese zwei gegenüberliegenden Außenseiten der Offshorestruktur derart zugeordnet, dass die Längsachsen der zylindrischen Hohlkörper zu der schwimmenden Drehachse zusammenfallen und diese in Richtung der Längsache der Offshorestruktur gesehen oberhalb des Massenschwerpunktes der Offshorestruktur liegt. Der Vorteil einer derartigen Positionierung des mindestens einen Auftriebselements, das die schwimmende Drehachse bildet, über dem Massenschwerpunkt besteht darin, dass sich bei der Gewichtsverlagerung bzw. bei der Verlagerung des Auftriebs die Offshorestruktur so um die schwimmende Drehachse dreht, dass ein unterer Teil der Offshorestruktur ins Wasser abtaucht und ein oberer Teil über das Wasser aufgerichtet wird.

Es ist weiterhin erfindungsgemäß vorgesehen, dass der Offshorestruktur mindestens ein zusätzliches Auftriebselement zugeordnet wird. Dieses mindestens eine zusätzliche Auftriebselement wird in Richtung der Längsachse der Offshorestruktur beabstandet von dem mindestens einen, die schwimmende Drehachse bildenden Auftriebselement positioniert. Das mindestens eine zusätzliche Auftriebselement kann in Richtung der Längsachse der Offshorestruktur gesehen in beliebiger Art und Weise an oder in die Offshorestruktur angekoppelt oder integriert werden. Vorzugsweise ist es vorgesehen, dass ähnlich gestaltete zusätzliche Auftriebselemente in Richtung der Längsachse der Offshorestruktur gesehen dem unteren Teil, dem späteren Unterwasserteil, der Offshorestruktur an gegenüberliegenden Außenseiten zugeordnet werden. Außerdem stellt es eine vorteilhafte Weiterentwicklung der Erfindung dar, wenn zwei weitere zusätzliche, ähnlich beschaffene, Auftriebselemente in Richtung der Längsachse der Offshorestruktur gesehen dem oberen Teil (Überwasserteil) der Offshorestruktur an gegenüberliegenden Außenseiten zugeordnet werden. Die zusätzlichen Auftriebselemente können mindestens zum Teil flexibel ausgerichtet sein. Eine derartige Positionierung der Auftriebselemente parallel zur Längsachse der Offshorestruktur führt zu einer Stabilisierung der selbigen während des waagerechten schwimmenden Transports. Somit wird verhindert, dass die Offshorestruktur während des Transports unkontrolliert kippt oder sich dreht.

Bevorzugt ist es weiter vorgesehen, dass durch Fluten und/oder Lenzen der Auftriebselemente der Auftrieb der Offshorestruktur verändert wird. Das Fluten kann im einfachsten Fall selbstständig erfolgen durch die Zufuhr einer Flüssigkeit, vorzugsweise von Meerwasser, in das jeweilige Auftriebselement. Das Lenzen der Auftriebselemente kann durch Lenzpumpen oder das Einblasen von Druckluft erfolgen. Der Auftrieb der Auftriebselemente kann aber auch durch das Einlassen bzw. Auslassen von Druckluft verändert werden.

Das Verfahren sieht es weiter vor, dass zum Transport der Offshorestruktur der Auftrieb der Auftriebselemente durch Fluten und/oder Lenzen der Auftriebselemente verändert wird. Vorzugsweise sind die Auftriebselemente vollständig mit Luft gefüllt, so dass die Offshorestruktur im Wasser liegt und ein Großteil der Offshorestruktur aus dem Wasser gehoben wird. Durch diesen erhöhten Auftrieb wird die Offshorestruktur ganz oder zum größten Teil aus dem Wasser gehoben. Es stellt sich als besonders vorteilhaft für den Transport der Offshorestruktur dar, wenn nur ein geringer Teil der Offshorestruktur unterhalb der Wasseroberfläche liegt, da so der Wasserwiderstand der Offshorestruktur während des Transports minimiert wird und der Transport der Offshorestruktur weniger abhängig von der Wassertiefe wird.

Weiter ist es erfindungsgemäß vorgesehen, dass durch den Auftrieb der Auftriebselemente die Offshorestruktur im Wasser liegend schwimmt und durch Wasserfahrzeuge bewegt, insbesondere zum Gründungsort geschleppt wird. Das Schleppen der Offshorestruktur zum Gründungsort erfolgt vorzugsweise mit Schleppern oder ähnlichen Wasserfahrzeugen.

Bevorzugt ist es vorgesehen, dass zum vorzugsweise selbsttätigen Aufrichten der Offshorestruktur der Auftrieb des mindestens einen dem abzusenkenden Teil, insbesondere dem Unterwasserteil der Offshorestruktur zugeordneten Auftriebselements reduziert wird, so dass durch die Reduzierung des Auftriebs das Unterwasserteil der Offshorestruktur mit dem gefluteten zusätzlichen Auftriebselement ins Wasser abgesenkt wird.

In einer vorteilhaften Ausführungsform ist es vorgesehen, dass zum Absenken der aufgerichteten Offshorestruktur am Gründungsort der Auftrieb des mindestens einen die schwimmende Drehachse bildenden Auftriebselements reduziert wird. Das erfolgt vorzugsweise durch Ballastieren mit Seewasser, wodurch ein langsames und gezieltes Absenken der Offshorestruktur gewährleistet ist.

Eine weitere vorteilhafte Ausführung des erfindungsgemäßen Verfahrens besteht darin, dass durch Veränderung des Auftriebs des mindestens einen zusätzlichen Auftriebselements, das sich nach dem Aufrichten oberhalb der schwimmenden Drehachse befindet, die Absenktiefe der Offshorestruktur der Meerestiefe entsprechend variiert wird. Durch das mindestens eine zusätzliche Auftriebselement oberhalb der schwimmenden Drehachse der Offshorestruktur lässt sich der Auftrieb durch gezieltes Lenzen und Fluten den Erfordernissen entsprechend verändern, um den Tiefgang der aufgerichteten Offshorestruktur an die Gegebenheiten dem Gründungsorts entsprechend anzupassen.

Eine besonders vorteilhafte Ausgestaltung der Erfindung sieht es vor, dass der Auftrieb der Offshorestruktur erzeugt wird durch Auftriebselemente, die an der Offshore-Struktur befestigbar, vorzugsweise lösbar befestigbar, sind und/oder durch in die Offshorestruktur integrierte Auftriebselemente. Auftriebselemente, die an der Offshorestruktur befestigbar bzw. lösbar befestigbar sind, sind besonders vorteilhaft, da sie an beliebigen Positionen der Offshorestruktur befestigt werden und wiederverwendet werden können. Außerdem ist es denkbar, dass mindestens einige Auftriebselemente in die Offshorestruktur selbst integriert sind. Diese ließe sich beispielsweise realisieren durch die Bildung von Auftriebskammern in ausgewählten hohlen Rohren der Offshorestruktur. Dadurch erübrigen sich zusätzliche Auftriebselemente oder es kann die Anzahl der selben reduziert werden. Derartige Auftriebselemente, die durch Kammern in der Rohrstruktur der Offshorestruktur gebildet werden, sind über Pumpen und Ventile derart ansteuerbar, dass sich durch Lenzen und Fluten der Auftrieb dieser Kammern und somit der Auftrieb der Offshorestruktur verändern lässt.

Außerdem ist es erfindungsgemäß vorgesehen, dass der Auftrieb der Auftriebselemente derart gesteuert wird, dass neben dem automatischen Aufrichten eine automatische Variation der Schwimmlage und/oder das Absenken der Offshorestruktur auf den Meeresboden möglich werden. Dazu weisen die einzelne Auftriebselemente Pumpen, Ventile und Sensoren auf, über die sich durch Fluten und Lenzen der einzelnen Auftriebselemente ihre Auftriebskraft gezielt individuell und aufeinander abgestimmt steuern lässt.

Des Weiteren ist es erfindungsgemäß vorgesehen, dass der Auftrieb derjenigen zusätzlichen Auftriebselemente, bei denen es sich um aufblasbare Auftriebselemente handelt, dadurch gesteuert wird, dass der Grad der Gasbefüllung der Auftriebselemente variiert wird. Aufblasbare Auftriebselemente sind besonders vorteilhaft, da sie im nicht aufgeblasenen Zustand ein sehr geringes Eigengewicht aufweisen und besonders platzsparend sind. Dadurch bedingt lassen sie sich besonders flexibel an unterschiedlichen Positionen der Offshorestruktur installieren. Außerdem sind aufblasbare Auftriebselemente beim Absenken der Offshorestruktur besonders vorteilhaft, da hier bedingt durch den Wasserdruck der von außen auf die aufblasbaren Auftriebselemente wirkt, das Gas aus den Auftriebselementen besonders schnell und energieeffizient herausgedrückt wird.

Bevorzugt ist es außerdem vorgesehen, dass beim Drehen der Offshorestruktur während des Auftrichtens um die schwimmende Drehachse das getauchte Volumen des mindestens einen die schwimmende Drehachse bildenden Auftriebselements nahezu gleich bleibt. Durch dieses Gleichbleiben des getauchten Volumens der Offshorestruktur während des Aufrichtens um die schwimmende Drehachse vollzieht sich das Drehen besonders gleichmäßig. Außerdem kann bei dieser Art des Drehens das Aufrichten sehr gut kontrolliert werden. Insbesondere kann so ein unvorhergesehenes Aufsetzen der Offshorestruktur auf den Meeresboden vermieden werden.

Ein Ausführungsbeispiel der Erfindung wird im Folgenden anhand der Zeichnung näher erläutert. In dieser zeigen:

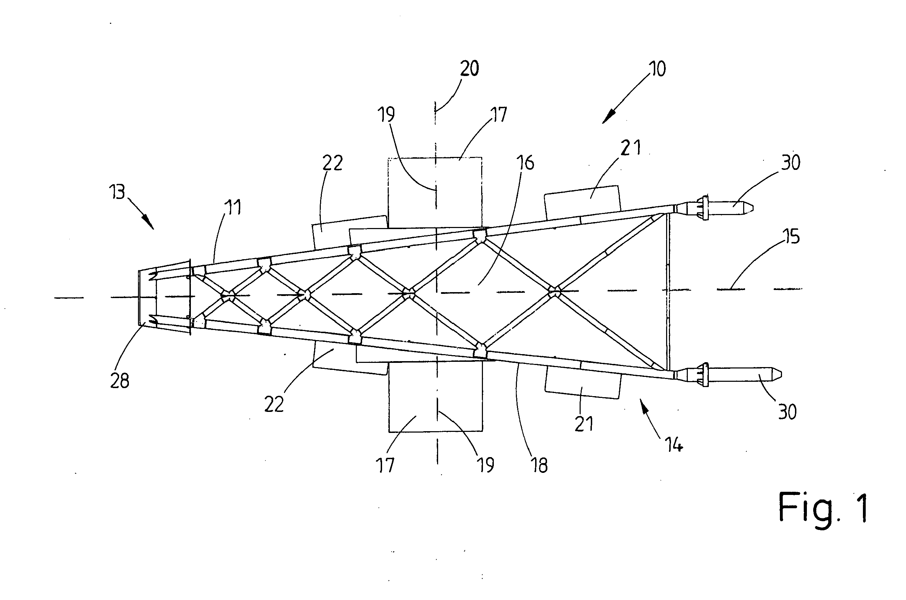

- Fig. 1: eine schematische Seitenansicht einer Gründungsstruktur mit Auftriebselementen,

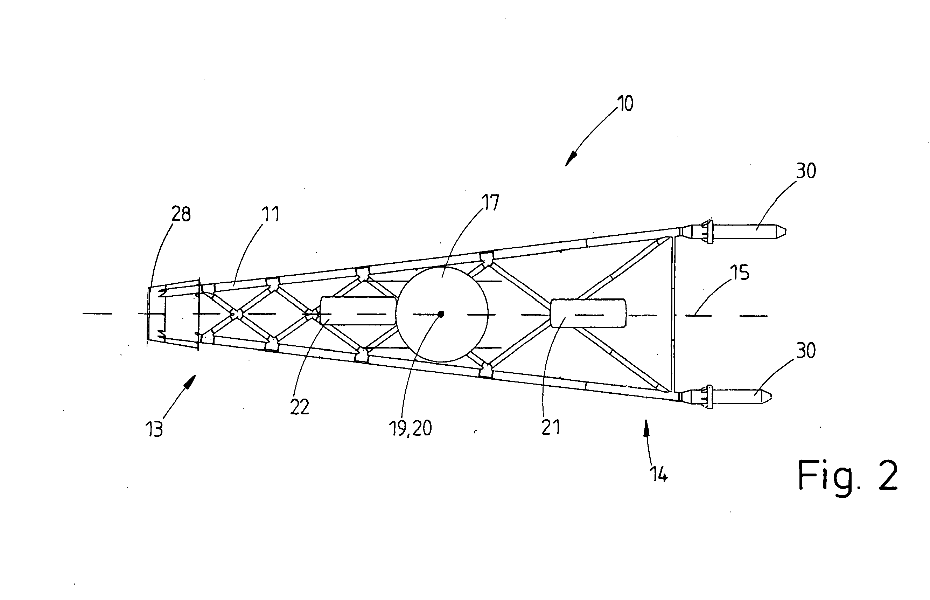

- Fig. 2: eine um 90° gedrehte schematische Seitenansicht der Gründungsstruktur der Fig. 1,
- Fig. 3: eine schematische Ansicht des Transportvorgangs der Gründungsstrüktur im Wasser,
- Fig. 4: eine schematische Seitenansicht der Gründungsstruktur während des Aufrichtungsvorgangs, und
- Fig. 5: eine schematische Ansicht des Absenkvorgangs der Gründungsstruktur im Wasser.

Die in den Figuren gezeigte Gründungsstruktur 10 weist eine gitterartige Rohrstruktur 11 auf. Ein nach der Gründung aus dem Wasser herausschauender oberer Teil 13 der Rohrstruktur 11 ist mit einem als Anschlussteil für den Turm beispielsweise einer Windkraftanlage dienendes Zwischenstück 28 versehen. Ein nach der Installation der Gründungsstruktur 10 sich unter Wasser befindender unterer Teil 14 der Rohrstruktur 11 ist mit Groutzapfen 30 versehen, die in bereits zuvor im Meeresboden eingebrachte Rammpfähle (nicht dargestellt) eingeführt werden. An der Stelle der Groutzapfen 30 kann der untere Teil 14 der Rohrstruktur 11 auch mit Pfahlhülsen oder anderen Gründungsmitteln versehen sein.

Eine mittig durch die Gründungsstruktur 10 verlaufende Längsachse 15 verläuft bei installierter Gründungsstruktur 10 senkrecht, stellt dann quasi eine senkrechte Längsmittelachse dar. Auf der Längsachse 15 liegt ein Massenschwerpunkt 16 der Gründungsstruktur 10. Weil sich die Rohrstruktur 11 zum oberen Teil 13 hin verjüngt, liegt der Massenschwerpunkt 16 etwas unterhalb der halben Höhe der Rohrstruktur 11.

Die Gründungsstruktur 10 ist in dem dargestellten Ausführungsbeispiel mit sechs Auftriebselementen versehen. Zwei der Auftriebselemente sind als zylindrische Auftriebselemente 17 an den Außenseiten 18 der Rohrstruktur 11 dauerhaft oder abnehmbar befestigt. Die zylindrischen Auftriebselemente 17 sind derart an den Außenseiten 18 der Gründungsstruktur 10 befestigt, dass ihre Längsmittelachsen 19 auf einer gemeinsamen Linie liegen, die eine schwimmende Drehachse 20 der Gründungsstruktur 10 bildet. Es ist auch denkbar, dass die Auftriebselemente 17 eine andere Form aufweisen.

Diese durch die zylindrischen Auftriebselemente 17 gebildete schwimmende Drehachse 20 verläuft unter einem rechten Winkel zur Längsachse 15 der Gründungsstruktur 10 und schneidet diese Längsachse 15 in Richtung des oberen Teils 13 der Gründungsstruktur 10 gesehen über dem Massenschwerpunkt 16.

Die zylindrischen Auftriebselemente 17 sind als gestaltsunveränderliche, starre Hohlkörper ausgebildet. Vorzugsweise handelt es sich um fassartige Auftriebselemente 17. Der Auftrieb der zylindrischen Auftriebselemente 17 ist durch Lenzen oder Fluten veränderbar. Das Fluten kann durch verschließbare Ventile erfolgen, die einen gezielten Eintritt von Seewasser in die Auftriebselemente 17 zulassen. Zum Lenzen wird das Seewasser in den Auftriebselementen 17 durch Druckluft herausgedrückt.

Neben den beiden zylindrischen Auftriebselementen 17 sind dem unteren Teil 14 der Gründungsstruktur 10 zwei weitere zusätzliche Auftriebselemente zugeordnet. Diese beiden zusätzlichen Auftriebselemente 21 am unteren Teil 14 der Gründungsstruktur 10 sind an den Außenseiten 18 der Gründungsstruktur 10 vorzugsweise lösbar befestigt.

Zwei weitere zusätzliche Auftriebselemente 22 sind am oberen Teil 13 der Gründungsstruktur 10 ebenfalls vorzugsweise lösbar angebracht. Die zusätzlichen Auftriebselemente 21 und 22 sind von der Längsachse 15 der Gründungsstruktur 10 beabstandet an den Außenseiten 18 der Rohrstruktur 11 angeordnet.

Die zusätzlichen Auftriebselemente 21, 22 können eine beliebige Gestalt aufweisen. Sie sind vorzugsweise quaderförmig oder zylindrisch ausgebildet. Es ist allerdings besonders vorteilhaft, wenn die zusätzlichen Auftriebselemente 21, 22 eine Längsachse aufweisen, die parallel zu der Längsachse 15 der Gründungsstruktur 10 ausgerichtet ist. Die zusätzlichen Auftriebselemente 21 und 22 sind parallel zu der Längsachse 15 der Gründungsstruktur 10 der selbigen zugeordnet.

Die zusätzlichen Auftriebselemente 21, 22 sind im Gegensatz zu ihren Auftriebselementen 17 flexibel ausgebildet, also zusammenfaltbar. Der Auftrieb der zusätzlichen Auftriebselemente 21, 22 kann kontinuierlich durch Befüllen mit Druckluft erhöht werden. Durch Ablassen der Druckluft kann der Auftrieb der zusätzlichen Auftriebselemente 21, 22 verringert werden. Die Auftriebselemente 21, 22 können aber auch in ihrem mit Druckluft gefüllten Zustand oder in ihrem geleerten Zustand ganz von der Gründungsstruktur entfernt werden. Sie können aber auch als starre Hohlkörper ausgebildet sein.

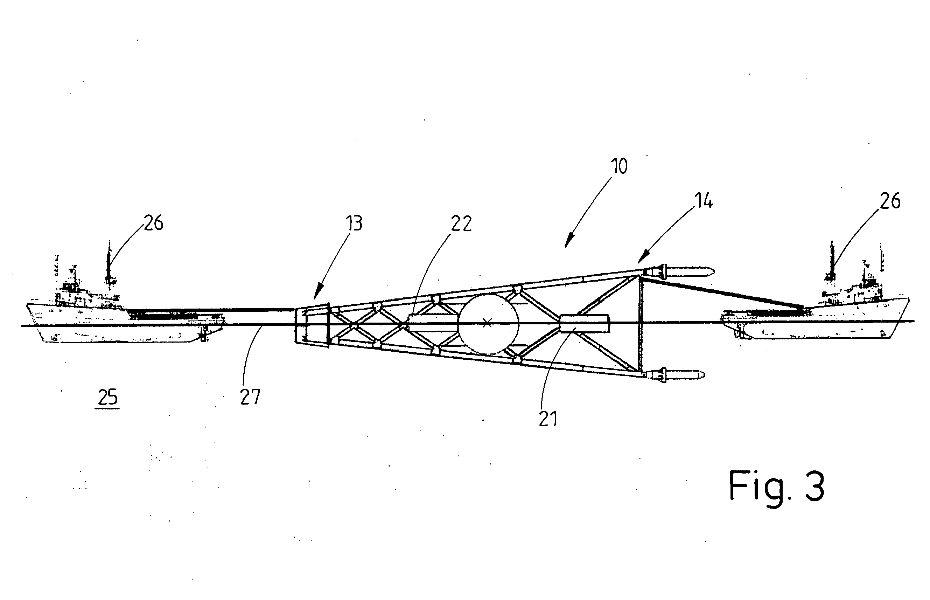

Die Erfindung ist nicht auf die gezeigte Ausbildung oder Anordnung der Auftriebselemente 17, 21, 22 beschränkt. Insbesondere die Auftriebselemente 21, 22 können an beliebigen Stellen des oberen Teils 13 und des unteren Teils 14 der Rohrstruktur 11 fest oder lösbar angeordnet sein. Auch ist es denkbar, insbesondere die zusätzlichen Auftriebselemente 21, 22 in die Rohrstruktur 11 zu integrieren, indem wasserdichte Abschnitte der Rohre zur Bildung der Rohrstruktur 11 als flutbare und lenzbare Hohlkörper ausgebildet sind. Auch können insbesondere die zusätzlichen Auftriebselemente 21, 22 beliebige Gestalten aufweisen. Denkbar ist es auch, dass wegen der über dem Massenschwerpunkt 16 der Gründungsstruktur 10 angeordneten Auftriebselemente 17 nur dem unteren Teil 14 der Rohrstruktur 11 zusätzliche Auftriebselemente 21 zugeordnet sind. Die zusätzlichen Auftriebselemente 22 am oberen Teil 13 der Gründungsstruktur 10 können dann entfallen. Das erfindungsgemäße Verfahren wird nachfolgend anhand der Fig. 3 bis 5 näher erläutert:

Die Gründungsstruktur 10 wird in liegender Position, das heißt mit parallel oder nahezu parallel zum Land 24 verlaufender Längsachse 15, hergestellt. Die fertige Gründungsstruktur 10 wird in an sich bekannter Weise vom Land 24 ins Wasser 25 gelassen. Ein schwieriges und gefährliches Aufrichten der Gründungsstruktur 10 an Land 24 ist nicht notwendig. Dadurch, dass die Auftriebselemente 17, 21 und 22 vollständig mit Luft gefüllt sind, ist die Auftriebskraft der Gründungsstruktur 10 größer als deren Gewichtskraft, wodurch die Gründungsstruktur 10 im Wasser 25 schwimmt. Durch Variation des Auftriebs der Auftriebselemente 17, 21, 22 sowie durch entsprechende Positionierung der Auftriebselemente 17, 21, 22 an der Gründungsstruktur 10, insbesondere ihrer Rohrstruktur 11, kann der Tiefgang der Gründungsstruktur 10 den Bedürfnissen entsprechend angepasst werden. Dadurch, dass sowohl am unteren Teil 14 als auch am oberen Teil 13 der Gründungsstruktur 10 Auftriebselemente 21, 22 befestigt sind, schwimmt die liegende Gründungsstruktur 10 stabil im Wasser 25.

In der Fig. 3 ist dargestellt, wie die liegende Gründungsstruktur 10 schwimmend im Wasser 25 transportiert wird. Aufgrund des durch die Auftriebselemente 17, 21, 22 erzeugten Auftriebs ist kein die Gründungsstruktur 10 tragendes Transportmittel wie ein Ponton oder eine Barge notwendig. Die Gründungsstruktur 10 schwimmt selbst ohne weitere Hilfsmittel im Wasser.

Zum Transport der Gründungsstruktur 10 vom Hafen zum Gründungsort wird die Gründungsstruktur 10 im liegenden Zustand schwimmenderweise von mindestens einem Schlepper 26, im gezeigten Ausführungsbeispiel zwei Schleppern 26, gezogen.

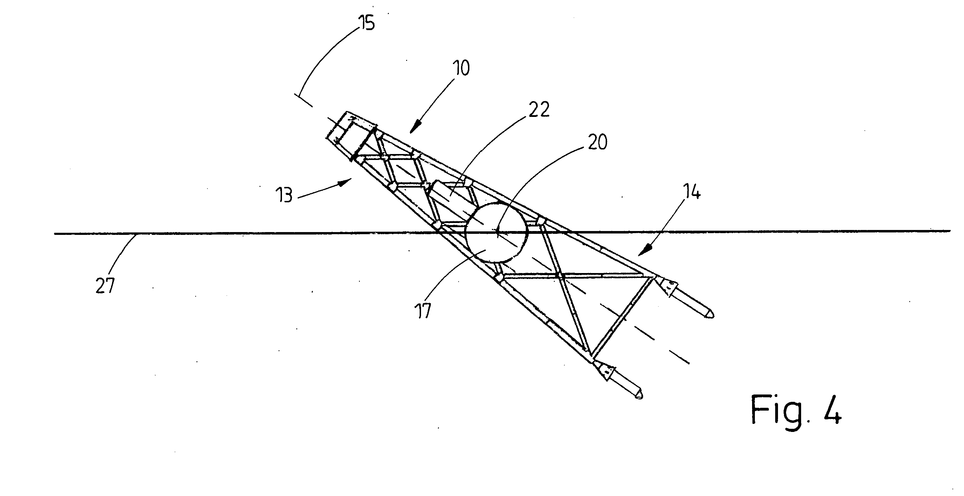

In der Fig. 4 ist dargestellt, wie die Gründungsstruktur 10 am Gründungsort selbsttätig aufgerichtet wird. Zum Aufrichten der Gründungsstruktur 10 wird Druckluft aus den zusätzlichen Auftriebselementen 21 am unteren Teil 14 der Gründungsstruktur 10 entsprechend abgelassen oder es werden die Auftriebselemente 21 mit Wasser geflutet bzw. von der Gründungsstruktur 10 entfernt. Durch das Ablassen der Druckluft oder durch das Fluten der zusätzlichen Auftriebselemente 21 am unteren Teil 14 der Gründungsstruktur 10 bzw. durch Entfernen der besagten Auftriebselemente verringert sich die Auftriebskraft am unteren Teil 14 der Gründungsstruktur 10. Dadurch, dass jetzt am unteren Teil 14 die Gewichtskraft der Gründungsstruktur 10 größer ist als deren Auftrieb, senkt sich der untere Teil 14 der Gründungsstruktur 10 von selbst, also automatisch, und ohne zusätzliche Hilfsmittel ins Wasser 25 ab. Das führt dazu, dass sich die gesamte Gründungsstruktur 10 um die horizontal schwimmende Drehachse 20 dreht. Im Gegenzug zum Absenken des unteren Teils 14 der Gründungsstruktur 10 hebt sich der obere Teil 13 der Gründungsstruktur 10 aus dem Wasser empor. Durch kontrollierte Steuerung des Flutens der Auftriebselemente wird die Gründungsstruktur 10 in eine aufrechte Position gebracht. In dieser aufrechten Position steht die Längsachse 15 der Gründungsstruktur 10 senkrecht zur Wasseroberfläche 27.

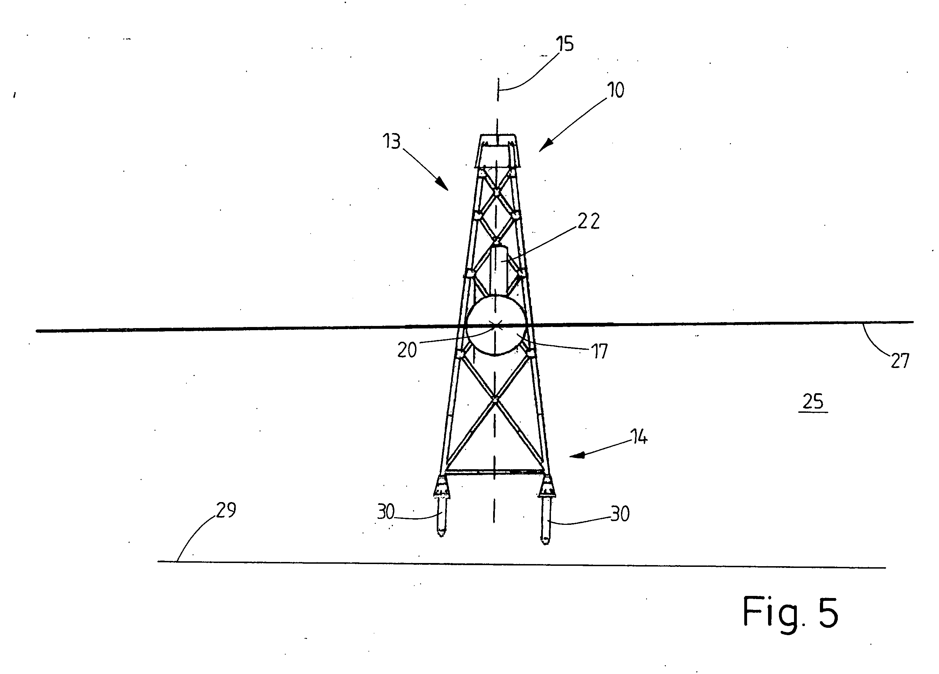

In Fig. 5 ist dargestellt, wie die aufrechte Gründungsstruktur 10 am Gründungsort abgesenkt wird. Dazu wird die Gründungsstruktur 10 durch gezieltes Fluten der Auftriebselemente 17 und gegebenenfalls der zusätzlichen Auftriebselemente 22 am oberen Teil 13 der Gründungsstruktur 10 abgesenkt und beim oder nach dem Absenken in an sich bekannter Weise auf dem Meeresboden in bereits vorinstallierte Raumpfähle verankert. Bei der hier gezeigten Gründungsstruktur 10 geschieht das mit den Groutzapfen 30. Die Gründungsstruktur 10 kann jedoch auch mit anderen Gründungsmitteln wie zum Beispiel Pfahlhülsen auf dem Meeresboden verankert werden.

Wenn es erforderlich sein sollte, kann durch erneutes Lenzen der Auftriebselemente 17, 21, 22 der Auftrieb der Gründungsstruktur 10 wieder erhöht werden, so dass sich die Gründungsstruktur 10 aus dem Wasser 25 erhebt und nach selbsttätigem Überführen in eine liegende Position beispielsweise wieder zum Hafen transportiert werden kann.

### Bezugszeichenliste:

- 10: Gründungsstruktur
- 11: Rohrstruktur
- 13: oberer Teil
- 14: unterer Teil
- 15: Längsachse
- 16: Massenschwerpunkt
- 17: zylindrischer Auftriebselemente
- 18: Außenseite
- 19: Längsmittelachse
- 20: schwimmende Drehachse
- 21: zusätzlicher Auftriebselemente
- 22: zusätzlicher Auftriebselemente
- 23: Kran
- 24: Land
- 25: Wasser
- 26: Schlepper
- 27: Wasseroberfläche
- 28: Zwischenstück
- 29: Meeresboden
- 30: Groutzapfen

## Patentansprüche

1. Verfahren zur Installation einer Offshorestruktur, insbesondere einer Gründungsstruktur (10) für eine Windenergieanlage, wobei die Offshorestruktur mit Auftriebselementen versehen wird, die Offshorestruktur schwimmend zum Gründungsort transportiert und am Gründungsort abgesenkt wird, **dadurch gekennzeichnet, dass** die Offshorestruktur im liegenden Zustand schwimmend zum Installationsort transportiert wird und vor dem Absenken durch Verlagerung des Auftriebs aufgerichtet wird.

2. Verfahren nach Anspruch 1, **dadurch gekennzeichnet, dass** von mindestens einem Auftriebselement (17), vorzugsweise einer Längsachse desselben, eine schwimmende Drehachse (20) der Offshorestruktur gebildet wird, wobei sich die Offshorestruktur beim, vorzugsweise selbsttätigen, Aufrichten um die schwimmende Drehachse (20) dreht.

3. Verfahren nach einem der Ansprüche 1 oder 2, **dadurch gekennzeichnet, dass** das mindestens eine, die schwimmende Drehachse (20) bildende Auftriebselement (17) aus starren, vorzugsweise zylindrischen, Hohlkörpern gebildet wird.

4. Verfahren nach einem oder mehreren der Ansprüchen 1 bis 3, **dadurch gekennzeichnet, dass** das mindestens eine, die schwimmende Drehachse (20) bildende Auftriebselement (17), vorzugsweise der zylindrische Hohlkörper, derart der Offshorestruktur zugeordnet wird, dass die Längsachse oberhalb des Massenschwerpunktes (16) der Offshorestruktur und senkrecht zu der Längsachse (15) der Offshorestruktur ausgerichtet ist.

5. Verfahren nach einem oder mehreren der Ansprüche 1 bis 4, **dadurch gekennzeichnet, dass** der Offshorestruktur mindestens ein zusätzliches Auftriebselement (21, 22) zugeordnet wird, wobei mindestens ein zusätzliches Auftriebselement (21, 22) in Richtung der Längsachse (15) der Offshorestruktur beabstandet vom mindestens einen, die schwimmende Drehachse (20) bildenden Auftriebselement (17) positioniert wird.

6. Verfahren nach einem oder mehreren der Ansprüche 1 bis 5, **dadurch gekennzeichnet, dass** durch Fluten und/oder Lenzen der Auftriebselemente (17, 21, 22) der Auftrieb der Offshorestruktur verändert wird.

7. Verfahren nach einem oder mehreren der Ansprüche 1 bis 6, **dadurch gekennzeichnet, dass** zum Transport der Offshorestruktur der Auftrieb der Auftriebselemente (17, 21, 22) durch Fluten und/oder Lenzen der Auftriebselemente (17, 21, 22) verändert wird, vorzugsweise sind die Auftriebselemente (17, 21, 22) vollständig mit Luft gefüllt, so dass die Offshorestruktur im Wasser (25) liegt und ein Großteil der Offshorestruktur aus dem Wasser (25) gehoben wird.

8. Verfahren nach einem oder mehreren der Ansprüche 1 bis 7, **dadurch gekennzeichnet, dass** durch den Auftrieb der Auftriebselemente (17, 21, 22) die Offshorestruktur im Wasser (25) liegend schwimmt und durch Wasserfahrzeuge bewegt, insbesondere zum Gründungsort geschleppt wird.

9. Verfahren nach einem oder mehreren der Ansprüche 1 bis 8, **dadurch gekennzeichnet, dass** zum, vorzugsweise selbsttätigen, Aufrichten der Offshorestruktur der Auftrieb des mindestens einen dem abzusenkenden Teil, insbesondere Unterteil (14) der Offshorestruktur zugeordneten zusätzlichen Auftriebselements (21) reduziert wird, so dass durch die Reduzierung des Auftriebs das untere Teil (14) der Offshorestruktur mit dem zusätzlichen Auftriebselement (21) ins Wasser (25) abgesenkt wird.

10. Verfahren nach einem oder mehreren der Ansprüche 1 bis 9, **dadurch gekennzeichnet, dass** zum Absenken der aufgerichteten Offshorestruktur am Gründungsort der Auftrieb des mindestens einen, die schwimmende Drehachse (20) bildenden, Auftriebselement (17) reduziert wird, vorzugsweise durch Ballastieren mit Seewasser.

11. Verfahren nach einem oder mehreren der Ansprüche 1 bis 10, **dadurch gekennzeichnet, dass** durch Veränderung des Auftriebs des mindestens einen zusätzlichen Auftriebselements (22), das sich nach dem Aufrichten oberhalb der schwimmenden Drehachse (20) befindet, die Absenktiefe der Offshorestruktur der Meerestiefe entsprechend variiert wird.

12. Verfahren nach einem oder mehreren der Ansprüche 1 bis 11, **dadurch gekennzeichnet, dass** der Auftrieb der Offshorestruktur erzeugt wird durch Auftriebseiemente (17, 21, 22), die an der Offshorestruktur befestigbar, vorzugsweise lösbar befestigbar, sind und/oder durch in die Offshorestruktur integrierte Auftriebselemente.

13. Verfahren nach einem oder mehreren der Ansprüche 1 bis 12, **dadurch gekennzeichnet, dass** der Auftrieb der (17, 21, 22) Auftriebselemente derart gesteuert wird, dass eine automatische Variation der Schwimmlage der Offshorestruktur und das Absenken der Offshorestruktur auf dem Meeresboden möglich werden.

14. Verfahren nach einem oder mehreren der Ansprüche 1 bis 13, **dadurch gekennzeichnet, dass** der Auftrieb der zusätzlichen Auftriebselemente (21, 22), bei denen es sich vorzugsweise um aufblasbare Auftriebselementen (21, 22) handelt, dadurch gesteuert wird, dass der Grad der Gasbefüllung der Auftriebselemente (21, 22) variiert wird.

15. Verfahren nach einem oder mehreren der Ansprüche 1 bis 14, **dadurch gekennzeichnet, dass** beim Drehen der Offshorestruktur während des Aufrichtens um die schwimmende Drehachse (20) das getauchte Volumen des mindestens einen, die schwimmenden Drehachse (20) bildenden Auftriebselements (17) nahezu gleich bleibt.
